# EUROPEAN PATENT SPECIFICATION

(11) **EP 1 787 780 B1**
(45) Date of publication and mention of the grant of the patent: **18.06.2008**
(21) Application number: 05257112.2
(22) Date of filing: 17.11.2005
(51) Int. Cl.: B29C 41/20, B29C 41/04, B29C 41/34, A63B 43/00, B44F 1/06, B44F 1/10, B44C 5/00, G09F 19/02, B29C 33/12, B29D 22/00, B29K 75/00, B29L 31/54

(54) **Method of making a toy ball**
Verfahren zur Herstellung eines Spielballs
Procédé de fabrication d'une balle pour jouer.

(43) Date of publication of application: 23.05.2007
(73) Proprietor: Lin, Chia-Yen, Taipei (TW)
(72) Inventor: Lin, Chia-Yen, Taipei (TW)
(74) Representative: Gee, Steven William

(56) References cited:
- GB-A- 2 272 182
- US-A- 3 207 514
- US-A- 3 972 975
- US-A1- 2005 143 204
- PATENT ABSTRACTS OF JAPAN vol. 1997, no. 05, 30 May 1997 (1997-05-30) & JP 09 010360 A (NIPPON NODARON KK), 14 January 1997 (1997-01-14)
- PATENT ABSTRACTS OF JAPAN vol. 018, no. 502 (M-1676), 20 September 1994 (1994-09-20) & JP 06 170870 A (MAKOTO ISHIKAWA), 21 June 1994 (1994-06-21)

## Description

### BACKGROUND OF THE INVENTION

### 1. Field of the Invention

The present invention relates to a method of making a toy ball, which is a hollow ball having a figure fixed therein, such as a toy figurine, a plaything and an animal figure, and is manufactured using spin-molding and specific fixation of the figure to an inside of the toy ball so that the figure inside the toy ball can sway when the ball is shaken or hit.

### 2. The Prior Arts

A toy ball without a figure fixed therein is disclosed in US 2005/143204, which describes a toy ball made of polyurethane material in upper and lower mold halves and using a rotating molding machine to produce a PU surface layer in the form of a ball. A through-hole in the surface layer is used to inject a fluid into the ball and then a sealing device is inserted to seal the through-hole, a part of the sealing device lying outside the ball and being broken off.

Another toy ball is described in JP 09 010360, in which a model or figurine is suspended within the ball during molding and then released so as to be capable of floating freely within the ball.

Another known toy ball is embedded with a figure and/or a circuit board therein so as to create a specific visual effect and/or give out sound and light. A method of making a toy ball in accordance with the prior art comprises steps of: first, fixing a figure or a circuit board to a round ball mold; and then, injecting foamed plastic material or rubber into the ball mold to completely enclose the figure or the circuit board and thus form a round solid ball. Hence, the figure inside the solid ball cannot sway relative to the ball when the ball is shaken or hit. In addition, the bounce of the conventional solid ball cannot be adjusted by injecting different amount of liquid into the ball to form different pressure inside; and the solid ball cannot also be filled with flowable liquid doped with glitter powder or fluorescent powder for creating a specific visual effect.

Thus, it is desired to provide a method of making a toy ball having a figure fixed therein and able to sway at random to solve the above-mentioned problems.

### SUMMARY OF THE INVENTION

Since a toy figurine is embedded in a solid toy ball in prior designs and thus cannot sway at random, the objective of the present invention is to provide a method of making a toy ball, which is a hollow ball having a toy figurine fixed therein and able to sway at random when the toy ball is shaken or hit.

To achieve the above-mentioned objectives, a method of making a toy ball in accordance with the present invention, which is manufactured using spin-molding and specific fixation of a toy figure to an inside of the toy ball, comprises the steps of preparing an upper mold and a lower mold, in which an iron needle is inserted into a needle seat of the lower mold; preparing a toy figurine having a plastic supporting rod integrally formed thereon and an insertion hole for mounting with the iron needle of the lower mold; inserting and fixing the toy figurine through the insertion hole thereof to the iron needle of the lower mold; injecting liquid polyurethane glue into the upper mold, combining the lower mold with the upper mold, and turning the combined mold upside down; placing the combined mold on a rotational molding machine for spin-molding the polyurethane glue to a predetermined thickness, which suitably covers the plastic supporting rod so as to securely fix the toy figurine to the toy ball; cooling the liquid polyurethane glue, and then opening the upper mold and taking out the toy ball from the lower mold; injecting liquid doped with glitter powder or fluorescent powder into the toy ball through a through hole thereof; sealing the through hole of the toy ball using a plastic sealing needle and then cutting a part of the plastic sealing needle that remains outside the toy ball.

### BRIEF DESCRIPTION OF THE DRAWINGS

The present invention is defined in claim 1 and will be apparent to those skilled in the art by reading the following detailed description of preferred embodiments thereof, with reference to the attached drawings, in which:
FIG. 1 is a flow chart illustrating a method of making a toy ball in accordance with the present invention;
FIG. 2 is a sectional view of a lower mold in accordance with the present invention;
FIG. 3 is a sectional view of the lower mold, into which an iron needle is inserted, in accordance with the present invention;
FIG. 4 is a sectional view of a toy ball having a toy figurine with a plastic supporting rod fixed to the ball, which are in whole received in a mold, in accordance with the present invention;
FIG. 5 is a schematic view showing the iron needle, the plastic supporting rod and a plastic sealing needle of the present invention;
FIG. 6 is a schematic view illustrating that the lower mold is combined with a upper mold of the present invention; and
FIG. 7 illustrates a finished toy ball of the present invention.

### DETAILED DESCRIPTION OF THE PREFERRED EMBODIMENT

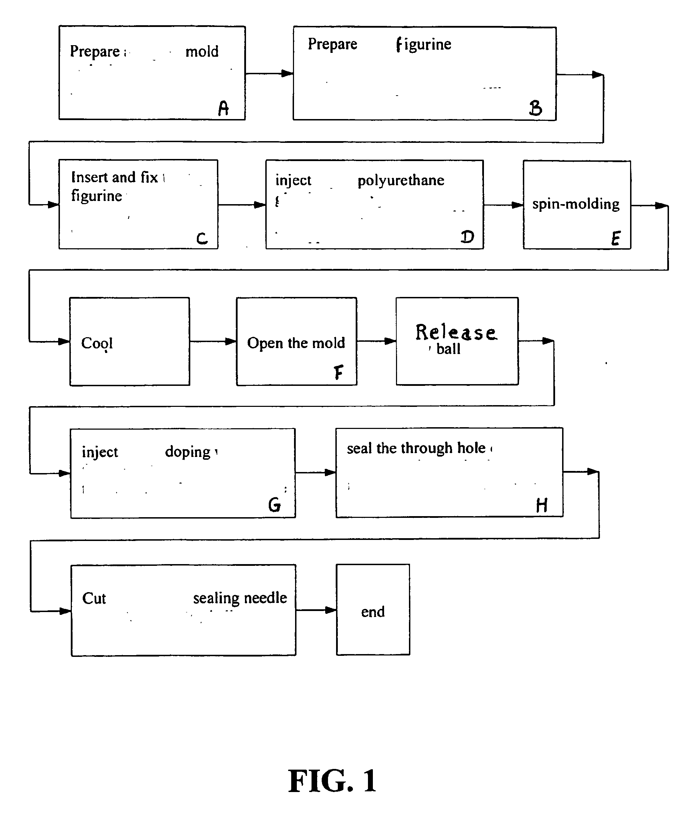

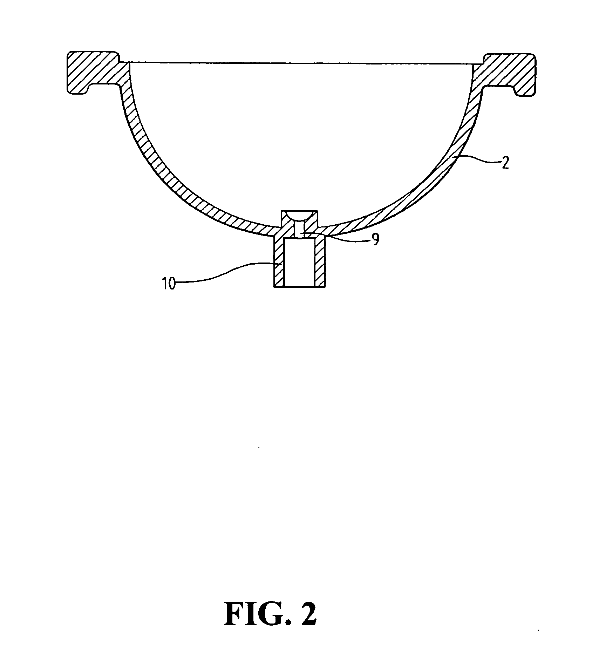

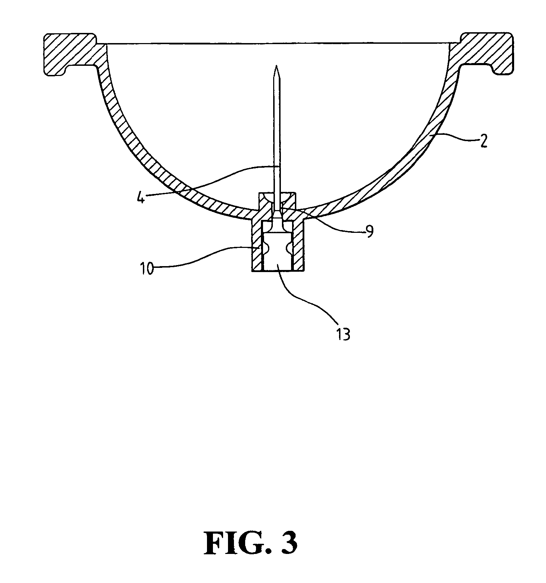

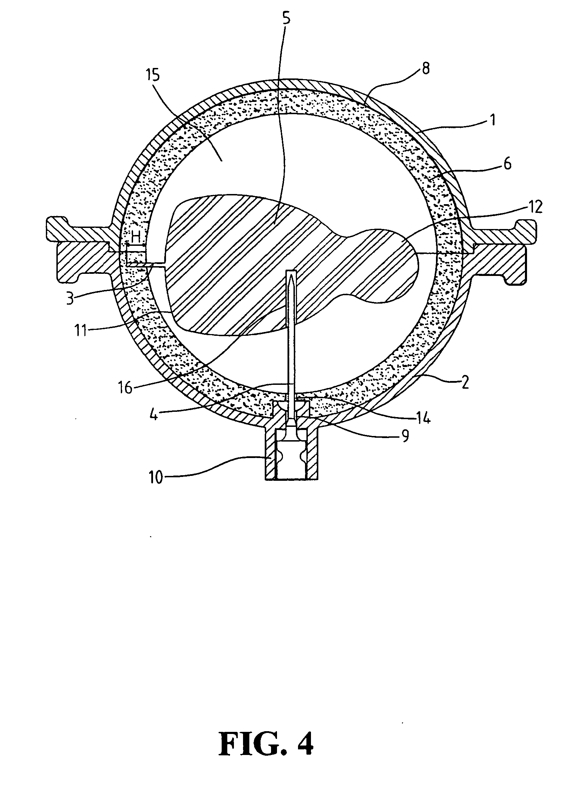

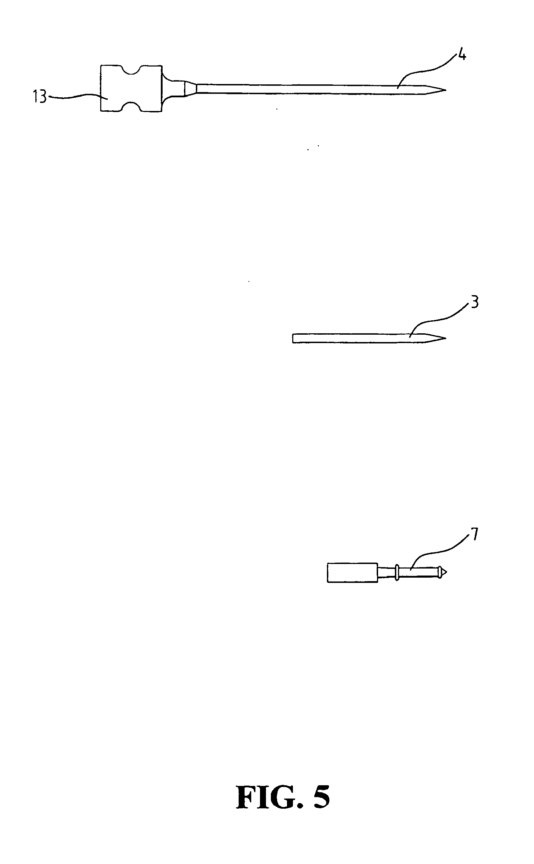

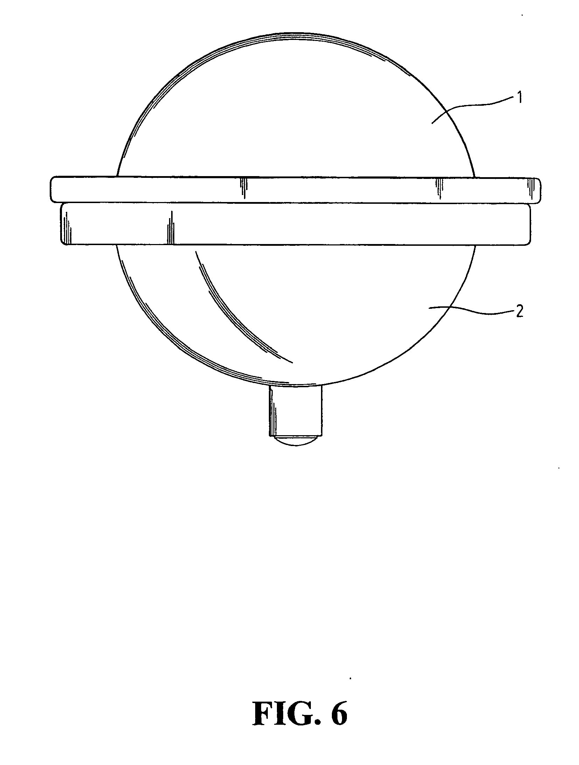

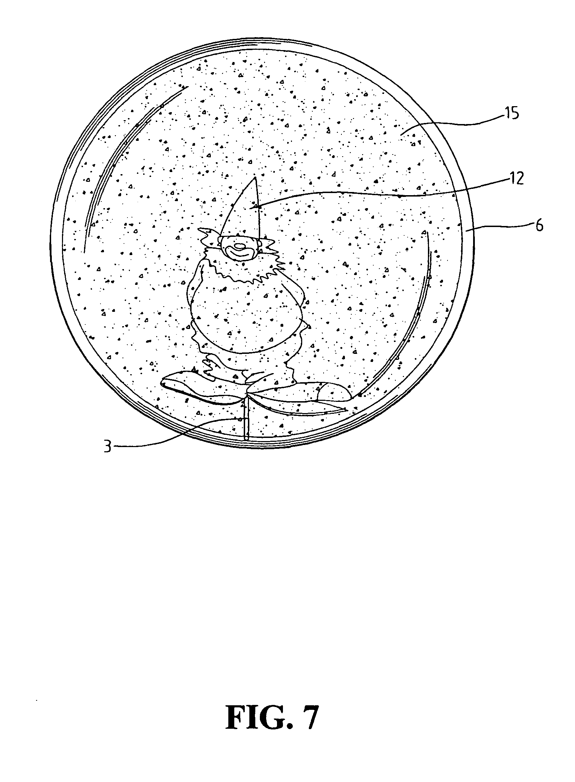

With reference to the drawings, and in particular to FIG 1, a preferred embodiment of making a toy ball comprises the steps of:
(a) Preparing an upper semi-spherical mold 1 and a lower semi-spherical mold 2 (see FIGS. 3 and 6), in which the lower mold 2 has a needle seat 10 having a needle hole 9 at a lowest point of a semi-spherical surface of the lower mold 2 for mounting with an iron needle 4;
(b) Inserting and mounting the iron needle 4 having a needle stand 13 to the needle seat 10 of the lower mold 2 (see FIGS. 2 and 3);
(c) Preparing a toy figurine 5 having a head portion 12 and a body portion 11, in which the body portion 11 has a plastic supporting rod 3 integrally formed at a bottom center thereof and an insertion hole 16 provided at a back thereof perpendicular to the plastic supporting rod 3 for mounting with the iron needle 4 of the lower mold 2 (see FIG. 4);
(d) Inserting and fixing the toy figurine 5 through the insertion hole 16 thereof to the iron needle 4 of the lower mold 2;
(e) Injecting liquid polyurethane glue, which is composed of prepolymer and chain extender, into the upper mold 1 taking about 1 second; combining the lower mold 2 with the upper mold 1 about 2 seconds; and turning the combined mold 180 degrees making the upper mold 1 at top position and the lower mold 2 at bottom position (see FIG. 6) about 1-2 seconds, and in total less than 5 seconds;
(f) placing the combined mold on a rotational molding machine for spin-molding the polyurethane glue about 3-30 minutes depending on the curing time after the mixing of the prepolymer and the chain extender, in which the polyurethane glue is increasingly pushed to a mold wall 8 of the combined mold, due to centrifugal force, to form a ball shell 6, which increasingly covers the plastic supporting rod 3 with a thickness of H depending on the injection quantity of the polyurethane glue and the length of the plastic supporting rod 3 (see FIG. 4);
(g) Cooling the combined mold at room temperature for 24 hours or by chilled water for 12 hours;
(h) Opening the upper mold 1 and taking out the toy ball from the lower mold 2;
(i) Injecting liquid 15 doped with glitter powder or fluorescent powder into the toy ball through a through hole 14 thereof (see FIGS. 4 and 7), in which the hardness and bounce of the toy ball can be controlled by controlling the injection quantity of the liquid 15;
(j) Sealing the through hole 14 of the toy ball in water using a plastic sealing needle 7 (see FIG. 5), namely, sealing the toy ball by pre-pressing sealing method, whereby the liquid 15 will not leak during the sealing operation due to the balance between the water pressure and the liquid pressure inside the toy ball; and
(k) Cutting a part of the inserted plastic sealing needle 7 that remains outside the toy ball, to get the toy ball as shown in FIG. 7, in which the plastic sealing needle 7 has a length about 2 cm, the length of the inserted part into the through hole 14 of the toy ball is about 0.8 cm, and the remaining part outside the toy ball is about 1.2 cm.

The above steps of making a toy ball can be modified or changed. For example, at the step (c) of the present invention, the plastic supporting rod 3 integrally formed on the toy figurine 5 (see FIG. 5) may be separately manufactured and then inserted into a pre-set insertion hole (not shown) on a bottom center of the toy figurine 5. The plastic supporting rod 3 may be made by changing the material to offer the toy figurine 5 different levels of sway due to different elasticity. Further, at the step (c) of the present invention, the toy figurine in shape or pattern may be different. Next, at the step (i) of the present invention, the liquid 15 doped with glitter powder or fluorescent powder may be pure water, or changed to mineral oils, brine, polymeric transparent liquids or edible oils having a lower freezing point so as to prevent it from being frozen in winter and thus resulting in losing its elasticity; and at the step (e) of the present invention, essences or fluorescent powder may be added to the prepolymer or the chain extender to make the polyurethane ball smell good or give out fluorescence at night.

While we have shown and described the embodiments in accordance with the present invention, it should be clear to those skilled in the art that further embodiments may be made without departing from the scope of the present invention as defined in the claims.

## Claims

1. A method of making a toy ball, comprising the steps of:
(a) preparing an upper mold (1) and a lower mold (2), in which an iron needle-(4) is inserted into a needle seat (10) of the lower mold;
(b) preparing a toy figurine (5) having a plastic supporting rod (3) integrally formed at a bottom center thereof and an insertion hole (16) for mounting with the iron needle of the lower mold;
(c) inserting and fixing the toy figurine through the insertion hole thereof to the iron needle of the lower mold;
(d) injecting liquid polyurethane glue into the upper mold, combining the lower mold with the upper mold, and turning the combined mold upside down;
(e) placing the combined mold on a rotational molding machine for spin-molding the polyurethane glue to a predetermined thickness, which suitably covers the plastic supporting rod so as to securely fix the toy figurine to the toy ball;
(f) cooling the liquid polyurethane glue, and then opening the upper mold and taking out the toy ball from the lower mold;
(g) injecting liquid (15) doped with glitter powder or fluorescent powder into the toy ball through a through hole (14) thereof;
(h) sealing the through hole of the toy ball using a plastic sealing needle (7) and then cutting a part of the plastic sealing needle that remains outside the toy ball.

2. The method as claimed in Claim 1, wherein the plastic supporting rod (3) integrally formed on the toy figurine is separately manufactured and then inserted into a pre-set insertion hole on the toy figurine.

3. The method as claimed in Claim 1, wherein the liquid polyurethane glue is composed of prepolymer and chain extender.

4. The method as claimed in Claim 1, wherein the injection quantity of the liquid polyurethane glue can be adjusted to control a covering depth (H) of the plastic supporting rod.

5. The method as claimed in Claim 1, wherein the step (f) of cooling the liquid polyurethane glue can be operated at room temperature or by chilled water cooling.

6. The method as claimed in Claim 1, wherein in the step (g), the injection quantity of the liquid doped with glitter powder or fluorescent powder into the toy ball can be adjusted to control the pressure inside the toy ball.

7. The method as claimed in Claim 1, wherein in the step (g), the liquid (15) doped with glitter powder or fluorescent powder is pure water.

8. The method as claimed in Claim 1, wherein in the step (g), the liquid (15) doped with glitter powder or fluorescent powder can be mineral oils, brine, polymeric transparent liquids or edible oils.

9. The method as claimed in Claim 1, wherein the step (h) of sealing the through hole of the toy ball is operated in water.

10. The method as claimed in Claim 1, wherein the plastic supporting rod (3) can be made by changing the material to offer the toy figurine different levels of sway.

11. The method as claimed in Claim 3, wherein essences or fluorescent powder can be added to the prepolymer or the chain extender to make the toy ball smell good or give out fluorescence at night.

## Patentansprüche

1. Verfahren zur Herstellung eines Spielzeugballs, das folgende Schritte umfasst:
(a) Die Vorbereitung einer oberen Form (1) und einer unteren Form (2), in die eine Eisennadel (4) in eine Nadelaufnahme (10) der unteren Form eingesetzt ist;
(b) Die Vorbereitung einer Spielzeugfigur (5), die eine tragende Kunststoffstange (3) besitzt, die integral in der Bodenmitte derselben geformt ist, sowie eine Einführungsbohrung (16) zur Montage mit der Eisennadel der unteren Form;
(c) Die Einführung und Befestigung der Spielzeugfigur durch die Einführungsbohrung derselben an der Eisennadel der unteren Form;
(d) Die Einspritzung von flüssigem Polyurethanklebstoff in die obere Form, die Verbindung der unteren mit der oberen Form, und die Umdrehung der verbundenen Form;
(e) Die Platzierung der verbundenen Form auf einer Rotationsformmaschine zur Formschleuderung des Polyurethanklebstoffs zu einer vorgegebenen Dicke, die die tragende Kunststoffstange angemessen abdeckt, um die Spielzeugfigur sicher an dem Spielzeugball zu befestigen;
(f) Die Abkühlung des flüssigen Polyurethanklebstoffs und anschließende Öffnung der oberen Form sowie die Herausnahme des Spielzeugballs aus der unteren Form;
(g) Die Einspritzung einer mit Glitzerpulver oder fluoreszierendem Pulver dotierten Flüssigkeit (15) in den Spielzeugball durch eine Durchgangsbohrung (14) desselben;
(h) Die Abdichtung der Durchgangsbohrung des Spielzeugballs unter Verwendung einer Abdichtnadel aus Kunststoff (7), sowie das anschließende Abschneiden eines Teils der Abdichtnadel aus Kunststoff, der außerhalb des Spielzeugballs verbleibt.

2. Verfahren nach Anspruch 1, bei dem die integral auf der Spielzeugfigur geformte tragende Kunststoffstange (3) separat hergestellt wird und dann in eine vorgegebene Einführungsbohrung auf der Spielzeugfigur eingesetzt wird.

3. Verfahren nach Anspruch 1, bei dem der flüssige Polyurethanklebstoff aus Vorpolymer und Ketten-Streckmitteln besteht.

4. Verfahren nach Anspruch 1, bei dem die Einspritzmenge des flüssigen Polyurethanklebstoffs angepasst werden kann, um eine Abdecktiefe (H) der tragenden Kunststoffstange zu regeln.

5. Verfahren nach Anspruch 1, bei dem der Schritt (f) zur Abkühlung des flüssigen Polyurethanklebstoffs bei Raumtemperatur oder mittels Wasserkühlung durchgeführt werden kann.

6. Verfahren nach Anspruch 1, bei dem bei dem Schritt (g) die in den Spielzeugball eingespritzte Menge der mit Glitzerpulver oder fluoreszierendem Pulver dotierten Flüssigkeit angepasst werden kann, um den Druck innerhalb des Spielzeugballs zu regeln.

7. Verfahren nach Anspruch 1, bei dem es sich bei der mit Glitzerpulver oder fluoreszierendem Pulver dotierten Flüssigkeit (15) beim Schritt (g) um destilliertes Wasser handelt.

8. Verfahren nach Anspruch 1, bei dem es sich bei der mit Glitzerpulver oder fluoreszierendem Pulver dotierten Flüssigkeit (15) beim Schritt (g) um Mineralöle, Lauge, transparente Polymerflüssigkeiten oder Speiseöl handeln kann.

9. Verfahren nach Anspruch 1, bei dem der Schritt (h) des Abdichtens der Durchgangsbohrung des Spielzeugballs im Wasser durchgeführt wird.

10. Verfahren nach Anspruch 1, bei dem die tragende Kunststoffstange (3) hergestellt werden kann, indem das Material geändert wird, um der Spielzeugfigur unterschiedliche Schwinggrade zu verleihen.

11. Verfahren nach Anspruch 3, bei dem Essenzen oder fluoreszierendes Pulver zu dem Vorpolymer oder Ketten-Streckmittel hinzugefügt werden können, damit der Spielzeugball gut riecht oder nachts fluoreszierendes Licht abgibt.

## Revendications

1. Procédé de fabrication d'une balle jouet, comprenant les étapes consistant à :
(a) préparer un moule supérieur (1) et un moule inférieur (2), dans lequel une aiguille en fer (4) est insérée dans un siège d'aiguille (10) du moule inférieur ;
(b) préparer une figurine jouet (5) ayant une tige de support en plastique (3) intégralement formée au centre de sa base et un orifice d'insertion (16) pour l'assemblage avec l'aiguille en fer du moule inférieur ;
(c) insérer et fixer la figurine jouet par son orifice d'insertion à l'aiguille en fer du moule inférieur ;
(d) injecter de la colle polyuréthane liquide dans le moule supérieur, en réunissant le moule inférieur et le moule supérieur, et en renversant le moule réuni ;
(e) placer le moule réuni sur une machine de moulage rotative pour un moulage par rotation de la colle polyuréthane à une épaisseur prédéterminée, qui recouvre de façon appropriée la tige de support en plastique de façon à fixer fermement la figurine jouet à la balle jouet ;
(f) refroidir la colle polyuréthane liquide, et ensuite ouvrir le moule supérieur et extraire la balle jouet du moule inférieur ;
(g) injecter du liquide (15) dopé avec de la poudre scintillante ou de la poudre fluorescente dans la balle jouet via son orifice de passage (14) ;
(h) obturer l'orifice de passage de la balle jouet en utilisant une aiguille d'étanchéité en plastique (7) et en coupant ensuite une partie de l'aiguille d'étanchéité en plastique qui reste à l'extérieur de la balle jouet.

2. Procédé selon la revendication 1, dans lequel la tige de support en plastique (3) intégralement formée sur la figurine jouet est fabriquée séparément et ensuite insérée dans un orifice d'insertion prédéfini sur la figurine jouet.

3. Procédé selon la revendication 1, dans lequel la colle polyuréthane liquide est composée de prépolymère et d'un agent d'allongement de chaîne.

4. Procédé selon la revendication 1, dans lequel la quantité d'injection de la colle polyuréthane liquide peut être adaptée pour contrôler une profondeur de revêtement (H) de la tige de support en plastique.

5. Procédé selon la revendication 1, dans lequel l'étape (f) de refroidissement de la colle polyuréthane liquide peut s'effectuer à température ambiante ou par un refroidissement à l'eau réfrigérée.

6. Procédé selon la revendication 1, dans lequel au cours de l'étape (g), la quantité d'injection du liquide dopé avec de la poudre scintillante ou de la poudre fluorescente dans la balle jouet peut être adaptée pour contrôler la pression à l'intérieur de la balle jouet.

7. Procédé selon la revendication 1, dans lequel au cours de l'étape (g), le liquide (15) dopé avec de la poudre scintillante ou de la poudre fluorescente est de l'eau pure.

8. Procédé selon la revendication 1, dans lequel au cours de l'étape (g), le liquide (15) dopé avec de la poudre scintillante ou de la poudre fluorescente peut être des huiles minérales, de l'eau saline, des liquides transparents polymériques ou des huiles comestibles.

9. Procédé selon la revendication 1, dans lequel l'étape (h) d'obturation de l'orifice de passage de la balle jouet s'effectue dans de l'eau.

10. Procédé selon la revendication 1, dans lequel la tige de support en plastique (3) peut être fabriquée en changeant le matériau pour offrir à la figurine jouet différents niveaux d'oscillation.

11. Procédé selon la revendication 3, dans lequel des essences ou de la poudre fluorescente peuvent être ajoutées au prépolymère ou à l'agent d'allongement de chaîne pour conférer un parfum agréable à la balle jouet ou la rendre fluorescente la nuit.
